# EUROPÄISCHE PATENTSCHRIFT

(11) **EP 1 394 197 B1**
(45) Veröffentlichungstag und Bekanntmachung des Hinweises auf die Patenterteilung: **02.05.2007**
(21) Anmeldenummer: 03015807.5
(22) Anmeldetag: 10.07.2003
(51) Int. Cl.: C08K 3/00, C08K 3/22, C08K 3/40

(54) **Hochviskose Formmassen mit nanoskaligen Füllstoffen**
Highly viscous moulding materials with nanoscale fillers
Matières a mouler de haute viscosité comprenant des charges nanometriques

(30) Priorität: 27.08.2002 DE 10239326
(43) Veröffentlichungstag der Anmeldung: 03.03.2004
(73) Patentinhaber: EMS-Chemie AG, 7013 Domat/Ems (CH)
(72) Erfinder: Stöppelmann, Georg, Dr.rer.nat, 7402 Bonaduz (CH); Kettl, Ralph, Dipl.-Ing. (FH), 7402 Bonaduz (CH)
(74) Vertreter: Becker Kurig Straus

(56) Entgegenhaltungen:
- EP-A- 1 333 052
- EP-A- 1 359 196
- WO-A-00/34372
- WO-A-01/18107
- WO-A-02/066553
- GB-A- 2 011 921
- US-A- 4 652 602
- US-A- 5 166 252

## Beschreibung

Die vorliegende Erfindung betrifft hochviskose Polyamid-Extrusions-Blasformmassen auf Basis Homo- oder Copolyamiden aus der Gruppe, bestehend aus Polyamid 6, Polyamid 46, Polyamid 6 6, Polyamid 11, Polyamid 12, Polyamid 12 12, Polyamid 10 12, Polyamid 6 10, Polyamid 6 12, Polyamid 6 9, Polyamid 12 T, Polyamid 10 T, Polyamid 12 T/12, Polyamid 10 T/12, Polyamid 12 T/10 6, Polyamid 10 T/10 6, Polyamid 6/6 6, Polyamid 6/6 12, Polyamid 6/6 6/6 10, Polyamid 6/6 6/12, Polyamid 6/6 T, Polyamid 6/6 I, Polyamid 6I/6T, Polyamid 6T/66, Polyamid 66/6I/6T oder deren Gemischen, Blends oder Legierungen und Schichtsilikaten als nanoskaligen Füllstoffen, faserförmigen Füllmaterialien und Schlagzähmodifikatoren. Die erfindungsgemäßen Formmassen weisen eine erhöhte Schmelzefestigkeit sowie ein vorteilhaftes ausgeglichenes mechanisches Eigenschaftsprofil, auch bei erhöhter Temperatur, auf und werden zur Herstellung von Formkörpern, Hohlkörpern, Halbzeugen, Platten und Rohren eingesetzt.

Hohlkörper aus Thermoplasten und damit auch Polyamid-Hohlkörper können prinzipiell nach dem Extrusionsblasverfahren bzw. den diesem Verfahren zuzuordnenden Sonderverfahren hergestellt werden. Die Palette an hergestellten Produkten umfasst dabei neben den gängigen Hohlkörpern im Verpackungsbereich - Flaschen, Kanister, Fässer etc. - eine Vielzahl technischer Formteile, z. B. Hohlkörper mit Anwendungen im Bereich der Automobilindustrie, wie Kraftstoffbehälter, Spoiler, Luftführungskanäle, Ansaugrohre bzw. Teile von Ansaugrohren oder Saugmodulen, Flüssigkeitsbehältern und Verkleidungen. In verstärktem Maße lassen sich mit neueren 3D-Verfahren (3D-Schlauchmanipulation, 3D-Saug-Blasverfahren) jede erdenkliche Form von Rohren und Schläuchen für druckführende und drucklose Medien herstellen. Diverse Verkleidungen und Gehäuse für die Haushaltsindustrie fallen in die Rubrik technische Teile genauso wie Spielzeug und Hohlkörper für die medizinische Technik.

Aus der Gruppe der technischen Thermoplaste haben sich dem Polyamid aufgrund seiner guten Barriere-Eigenschaften, seiner hohen Wärmeformbeständigkeit und seines hohen Glanzes zahlreiche Anwendungen erschlossen.

Das Prinzip des Extrusionsblasformens besteht darin, dass ein extrudierter Schmelzeschlauch von einer meist zweiteiligen, gekühlten Hohlform - dem Negativteil des herzustellenden Blasteils - aufgenommen und mit Hilfe von Druckluft zum fertigen Hohlkörper aufgeblasen wird. In den meisten Fällen tritt der im Ringspalt eines Querspritzkopfes erzeugte Schlauch senkrecht nach unten aus. Sobald dieser Vorformling die erforderliche Länge erreicht hat, werden die Formhälften geschlossen. Die Schneidkanten der Formen erfassen den Schlauch, verschweißen ihn und quetschen zugleich die nach oben und unten überstehenden Reste ab. Aus verarbeitungtechnischer Sicht ergeben sich für einen Rohstoff beim Blasformen folgende Forderungen:

Hohe Schmelzezähigkeit bzw. -festigkeit (hohe Viskosität): Diese Forderung resultiert aus der nötigen Schlauchstandfestigkeit, im Folgenden auch Schmelzefestigkeit genannt. Selbst bei Einsatz von Schmelzespeichern und niedrigen Verarbeitungstemperaturen können längere Vorformlinge produktionssicher und reproduzierbar nur aus Produkten mit entsprechend hoher Schlauchstandfestigkeit hergestellt werden. Allerdings stellt sich das Problem des Auslängens des Vorformlings unter dem Eigengewicht des extrudierten Schlauchs. Abgesehen von der Fertigung sehr kleiner Blaskörper scheiden daher Polyamide mit mittlerer und normaler Schmelzeviskosität, also Produkte mit einer rel. Viskosität ηᵣₑₗ < 3,5 (gemessen an einer 1 gew.-%igen Polyamid 6-Lösung in H₂SO₄ bei 25C°) für das ExtrusionsBlasverfahren aus. Beim Blasen von Hohlkörpern, deren Volumen etwa 0,5 1 übersteigt, ist man an die Verwendung von außerordentlich hochviskosen Einstellungen (ηᵣₑₗ > 4,0; gemessen an einer 1 gew.-%igen Polyamid 6-Lösung in H₂SO₄ bei 25C°) gebunden. Daher sind nur die hochmolekularen, die verzweigten oder vernetzten Polyamide als Rohstoffe für das Blasverfahren geeignet.

Hohe thermische Stabilität: Gründe hierfür sind die recht lange Verweilzeit des Materials bei hohen Temperaturen im Schlauchkopf sowie die Tatsache, dass die Vorformlingoberfläche während des Extrusions- und Aufblasvorgangs dem oxidativen Angriff durch Luftsauerstoff ausgesetzt ist.

Gute Schmelzedehnfähigkeit: Diese bestimmt im Wesentlichen das erreichbare Aufblasverhältnis und die Wanddickenverteilung.

Mischungen aus Polyamid, einer 2. polymeren Komponente und mineralischen Füllstoffen, die zum Extrusionsblasen verwendet werden, sind in CA 130 6562, EP-A-747 439, EP-A-597 648 und WO 95/20011 beschrieben. Jedoch ist in diesen Fällen immer eine zweite Polymer-Komponente notwendig.

In den Dokumenten DE-A 36 32 865, DE-A 38 08 623, EP-A 0 787 765 und DE-A 196 21 309 sind Mischungen von Polyamiden mit Silikaten beschrieben, die sich durch eine verbesserte mechanische Festigkeit und Zähigkeit auszeichnen. DE-A 196 21 309 verwendet ein Fluorglimmer-Polyamid-Gemisch und erwähnt als mögliche Anwendung auch das Blasformen.

Polyamid, d. h. Polyamid 6 (ohne Verstärkungsstoffe) mit einer mittleren Viskosität von ηᵣₑₗ < 3,5 (gemessen an einer 1 gew.-%igen Polyamid 6-Lösung in H₂SO₄ bei 25C°) lässt sich durch Blasformen nicht verarbeiten, weil die Polyamidschmelze keine ausreichende Schmelzestabilität aufweist.

Verbundmaterialien aus organischen Polymeren wie Polyamiden mit plättchenförmigen, nanoskaligen Füllstoffen, insbesondere schichtförmigen Silikaten (Phyllosilikaten) sind, wie oben dargelegt, bekannt. Diese Materialien zeichnen sich durch eine hohe Steifigkeit aus. Neben einer Verbesserung der Steifigkeit nimmt jedoch die Zähigkeit durch den Zusatz der Phyllosilikate ab.

Eine Schwierigkeit bei der Herstellung von Verbundmaterialien aus organischen Polymeren und plättchenförmigen, nanoskaligen Füllstoffen, insbesondere Schichtsilikaten ist die innige, dauerhafte Mischung des anorganischen und des organischen Materials.

Im Stand der Technik werden daher verschiedene Methoden beschrieben, diese dauerhafte Mischung des anorganischen Materials mit dem organischen Materials zu erzielen, wobei man einerseits von nanoskaligen Füllstoffen ausgeht, die nicht oberflächenbehandelt sind.

US 4,789,403 (Toyota) beschreibt die Herstellung von Zusammensetzungen aus organischem Material, wie z. B. Polyamiden und Schichtsilikaten. Die Schichtsilikate werden zur besseren Mischbarkeit mit dem organischen Material in unbehandelter Form zunächst mit Monomeren, Comonomeren oder Präpolymeren in einer Mühle innig gemischt. Dieses Pulver wird anschließend bei erhöhter Temperatur in N₂-Atmosphäre zu dem gewünschten Compositematerial polymerisiert. Als Schichtsilikate können dabei alle möglichen Schichtsilikate wie Halloysit, Illit, Kaolilinit, Montmorillonit oder Polygorskit eingesetzt werden.

Üblicherweise wird eine dauerhafte Mischung des organischen Materials mit dem anorganischen Material durch Modifizierung des anorganischen Materials in einem vorgeschalteten Schritt erreicht.

WO 99/29767 (DSM) beschreibt die Herstellung einer Polyamid-Nanokomposite-Zusammensetzung durch Mischen von unbehandelten Schichtsilikaten und Polyamiden. Diese Mischung wird extrudiert und nachfolgend Wasser in Mengen von bis zu 30 Gew.-% injiziert. Dieses Wasser wird dann später aus der Entgasungsöffnung ausgetragen. Die Polyamid-Nanokomposite-Zusammensetzung wird als Strang extrudiert und im Wasser abgekühlt.

Dieser Strang kann dann zu Granulat weiterverarbeitet werden.

WO 93/0411 (Allied Signal) beschreibt Compositematerialien, die eine Polymermatrix und darin gleichmäßig dispergierte plättchenförmige Partikel, insbesondere Phyllosilikate aufweisen. Die plättchenförmigen Partikel sind mit Oniumverbindungen gemäß den in der WO 93/04117 beschriebenen allgemeinen Formeln verknüpft, also hydrophobiert. Die Hydrophobierung wird in einem der Mischung mit dem Polymeren vorgeschalteten Schritt durchgeführt.

Ferner kann eine Verbindung der organischen und anorganischen Materialien durch eine Kupplung der beiden Komponenten mit Organosilanen erreicht werden. Die Modifikation ist jedoch umständlich und teuer.

Des Weiteren kann eine dauerhafte Mischung des organischen Materials mit dem anorganischen Material durch eine Oberflächenbehandlung des Schichtsilikats (Hydrophobierung, vgl. WO 93/0411) erreicht werden. Solche Schichtsilikate enthalten in ihrem negativ geladenen Gitter eingelagerte Kationen, wodurch der Schichtabstand zwischen den Silikatschichten aufgeweitet wird (delaminierte Schichtsilikate) und die Schichtsilikate bei einer anschließenden Polymerisation des organischen Monomers in Gegenwart der Schichtsilikate in einzelne Schichten zerfallen. Einige der so behandelten Schichtsilikate delaminieren jedoch nicht vollständig. Insbesondere wenn die Nanokomposites nicht "in situ" durch eine direkte Polymerisation der organischen Monomere in Anwesenheit der Schichtsilikate hergestellt werden, sondern durch eine technisch wesentlich einfachere Mischung aller Ausgangsstoffe, ist die Delaminierung der Schichtsilikate oft unvollständig. Dadurch ist die gleichmäßige Verteilung der einzelnen Schichten der Schichtsilikate in dem Kunststoff (organisches Material), insbesondere bei einer Herstellung der Nanokomposites durch Mischung, nicht optimal. Dies führt zu Materialien, die keine vorteilhaften Eigenschaften aufweisen, gegenüber mit nicht delaminierten Mineralien gemischten Materialien.

Im Stand der Technik wurden aber auch Versuche unternommen, die Schichtsilikate ohne Verwendung eines Oniumion- oder eines Silan-Haftvermittlers zu modifizieren. EP 0 747 323 B1 (AMCOL) beschreibt ein Interkalat, das exfoliert werden kann, indem es durch Extrudieren eines Gemisches aus einem Smektit, einem Interkalationspolymer und einem Flüssigkeitsträger durch eine Düsenöffnung hergestellt wird.

WO 99/07790 (TNO) beschreibt die Modifizierung von Smektit-Ton mit einem Blockcopolymer aus einem Polyethylenoxidblock und einem Polystyrolblock als polymerer Matrix. Der Ton wird zunächst mit dem Polyethylenoxid umgesetzt und dann mit der polymeren Matrix gemischt und dann ein Copolymer hergestellt.

Bei einer der Hauptanwendungen von Polymersystemen und insbesondere von Polyamidsystemen, die nanoskalige Füllstoffe enthalten, ergeben sich die Effekte, dass der thermische Ausdehnungskoeffizient im Vergleich zu ungefüllten Matrixpolymeren besonders in Verarbeitungsrichtung deutlich reduziert ist, wobei die fein verteilten Partikel die Permeation von Gasen und Flüssigkeiten deutlich reduzieren, ohne dass wie in klassischen gefüllten Systemen die Zähigkeit reduzieren. Daher ist eine Hauptanwendung von thermoplastischen Nanokomposites bei der Herstellung von Getränkeflaschen zu sehen, wobei häufig Mehrschichtsysteme zum Einsatz kommen, die eine Schicht aus einer Formmasse aus sogenannten Nanokomposite-Materialien aufweisen, welche die Permeation von Gasen reduzieren sollen. WO 99/44825 und WO 01/87596 (beide Eastman) beschreiben durchsichtige, thermoplastische Nanokomposite-Materialien, die in Mehrschichtsystemen verwendet werden und gute Barriere-Eigenschaften aufweisen.

Die Hauptanforderungen an die zuvor beschriebenen Materialien sind daher hohe Barriere gegen die Permeation von Gasen wie Sauerstoff oder Kohlendioxid sowie gute Transparenz. Damit die Transparenz des Basispolymeren erhalten bleibt, ist eine möglichst vollständige Dispergierung der häufig eingesetzten Schichtsilikate, beispielsweise Montmorillonit, notwendig. Um diese möglichst vollständige Verteilung der Schichtsilikate zu erreichen, werden verschiedene Verfahren beschrieben (siehe oben). Um die Verträglichkeit zwischen Polymer und Silikat zu erhöhen, die Grenzflächenspannungen zu verringern und die Dispersion der Schichten zu erleichtern, werden daher die Natrium-Ionen in den Montmorillonit-Zwischenschichten durch Onium-Ionen ausgetauscht (siehe oben). Beispiele hierfür sind Sulfonium-, Phosphonium- oder Ammonium-Verbindungen. In der WO 01/04197 werden alkoxylierte Ammonium-Ionen erwähnt. Ebenfalls soll die Reduktion des Natrium-Gehalts in Montmorilloniten deren Verteilung in einer Polyamid-Matrix erleichtern (EP 0940 430 B1; Toyota).

Weiterhin sind auch die Kombination von sowohl zwei Silikaten (WO 00/34375) als auch von zwei organischen Kationen zur Modifizierung bekannt (WO 00/341809).

Neben Schichtsilikaten natürlichen Ursprungs werden auch synthetische Mineralien wie Fluorglimmer beschrieben, die durch die Behandlung von Talkum mit Alkali-Siliziumfluoriden, zugänglich sind (US 5,414,042).

Verfahrensseitig lässt sich die Verteilung der Silikatschichte verbessern, indem zuerst ein Silikat-Polymer-Konzentrat erzeugt wird, das dann später auf die gewünschte Konzentration verdünnt wird. Dies kann in einem Verfahrenschritt oder in zwei getrennten erfolgen (WO 00/34393). Dabei kann dieses Konzentrat auch auf Basis eines Oligomeren hergestellt werden (WO 00/34377).

Auf Grund des bevorzugten Herstellungsverfahrens für Getränkeflaschen, nämlich des Spritzstreckblasens (WO 99/32547) wird häufig eine reduzierte Kristallisationsfähigkeit verlangt. Hierzu werden einem teilkristallinen Polymeren amorphe Polymere oder Oligomere hinzugegeben. In der WO 01/40369 (Eastman) wird als amorphes Polyamid (PA) ein MXD6/MXDI genannt. Eine hohe Kristallisationsgeschwindigkeit kann dazu führen, dass die Bindenaht, die beim Spritzgussprozess an der Stelle entsteht, an der zwei Schmelzefronten aufeinandertreffen, eine deutlich geringere mechanische Festigkeit als das Polymere an sich besitzt. Um diese Bindenahtfestigkeit zu erhöhen, wird in der EP 0885920A vorgeschlagen, ein mit Silikat verstärktes Polyamid 6-Homopolymer oder -Copolymer mit einem nicht verstärkten Polyamid zu kombinieren.

Als polymeres Material, welches üblicherweise in der Verpackungsindustrie zur Herstellung von Flaschen, Behältern etc. benutzt wird, wird üblicherweise Polyester wie Polyethylenterephthalat (PET) eingesetzt. Obwohl z. B. PET eine sehr gute Sauerstoffbarriere besitzt, ist dies jedoch bei Getränken wie Bier etc., die einen hohen CO₂-Gehalt haben, immer noch unzureichend. Daher wurden bereits Anstrengungen unternommen, um die Barriere-Eigenschaften von Polyestern zu verbessern. WO 93/04118 beschreibt ein Compositematerial aus einem schmelzeverarbeitbaren Polymer und bis zu 60 Gew.-% von dispergierten, plättchenartigen Partikeln. Unter einer Vielzahl von thermoplastischen Polymeren wird gemäß WO 93/04118 auch Polyester erwähnt.

Um die für die Flaschenherstellung notwendige Viskosität zu erreichen, können Polyester-Formassen, die plättchenförmige Füllstoffe enthalten, in der Festphase bei Temperaturen oberhalb der Glasumwandlungs-Temperatur und unterhalb des Schmelzpunktes unter Durchleitung eines Stickstoff-Stroms nachkondensiert werden (WO 98/29499).

Verfahren zur Herstellung hochviskoser Polyamid-Formassen sind ebenfalls bekannt: Entweder erfolgt eine Molekulargewichtserhöhung durch Festphasen-Nachkondensation oder durch Zugabe von reaktiven Verbindungen. Die durch Nachkondensation hergestellten Formmassen können trotz der hohen Molmasse bei längeren Standzeiten der Polyamid-Schmelze den Nachteil haben, dass besonders bei zu hohem Wassergehalt die notwendigen Schmelzestabilitäten für den Extrusions-Blasformprozess nicht erreicht werden.

Reaktive Zusätze wie Carbodiimide, mehrfach funktionelle Isocyanate können andererseits zu unkontrollierten Vernetzungen führen, was bei längeren Verweilzeiten sich in Auftreten von Gelpartikeln äußert. Darüber hinaus sind solche reaktiven Zusätze teuer und in ihrer Lagerstabilität begrenzt.

Für Extrusionsblasfähigkeit, wie oben dargelegt wurde, wird eine möglichst hohe Viskosität bei niedrigem Schergefälle benötigt. Derartig hohe Viskositäten lassen sich bei glasfaserverstärktem PA66 z. B. durch Festphasennachkondensation linearer PA66-Compounds erzielen, d. h., es wird ein PA66 mittlerer Viskosität mit z. B. 25 % Glasfaser auf einem Zweiwellenextruder compoundiert, und das erhaltene Granulat wird anschließend einer Nachkondensation in der Festphase unterzogen. Dies kann z. B. in einem Vakuumtaumeltrockner oder in einem kontinuierlichen Inertgastrockner unter dem Fachmann vertrauten Bedingungen erfolgen. Der Einsatz von hochviskosem unverstärktem PA66 als Basisharz bei der Compoundierung führt normalerweise nicht zu den erwünschten hochviskosen Materialien, da es durch die hohen Scherkräfte und Temperaturen im Extruder zum Polymerabbau und damit zur Viskositätsreduzierung kommt.

Eine andere Möglichkeit, um zu hochviskosem PA66 zu gelangen, ist der Einbau von Langkettenverzweigungen durch reaktive Extrusion, wie er z. B. für glasfaserverstärktes PA6 in EP-A 685 528 beschrieben wurde. Die Übertragung dieses Verfahrens der Verzweigung mittels Bisphenol A-Diglycidylether oder mit ähnlichen Verzweigern auf glasfaserverstärktes PA66 führt zwar ebenfalls zu hochviskosem extrudierbarem PA66, die Oberflächenqualität und Quetschnahtfestigkeit aus derartigen Compounds extrusionsblasgeformter Hohlkörper sind jedoch für die meisten technisch relevanten Anwendungen nicht ausreichend.

DE 100 22 144 A1 (Bayer) beschreibt Formmassen, die 60-90 Gew.-% Teile Polyamid, 10-40 Gew.-% Teile Verstärkungsstoffe und 0,5-6 Gew.-% Teile nanoskalige Schichtsilikate enthalten und zur Herstellung von Formkörpern, insbesondere von Leitungssystemen und/oder Speichersystemen verwendet werden können. Die Formmassen gemäß DE 100 22 144 A1 weisen nur eine normale Schmelzefestigkeit auf und sind weniger für den Extrusions-Blasformprozess geeignet.

Die nachveröffentlichte DE 101 25 560 A1 (BASF) beschreibt die Herstellung von Formteilen im Spritzgussverfahren aus Polyamid-Nanokomposites, die 60-99,9 Gew.-% mindestens eines Polyamids (A) und 0,1-40 Gew.-% eines delaminierten Schichtsilikats (B) enthalten, durch Einbringen einer Schmelze, enthaltend (A) und (B) über einen Anguss in ein Spritzgusswerkzeug. Die Polyamid-Nanokomposites können als optionale Komponente weitere übliche Zusatzstoffe in Anteilen von 0-70 Gew.-% enthalten. Die Formteile gemäß DE 101 25 560 A1 mit verbesserter Zähigkeit werden durch Spritzgussverfahren hergestellt, wenn man besondere Spritzgussbedingungen einstellt.

GB-A-2 011 921 beschreibt mit Glasfasern verstärkte Polyesterformmassen, welchen Glimmerpartikel mit Partikelgrößen von 2000 µm bis 44 µm (10 mesh bis 325 mesh) zugesetzt worden sind.

WO 01/18107 beschreibt Extrusionsformmassen bzw. daraus hergestellte Teile. Die angesprochenen Teile werden durch einfache, horizontale Extrusion, z. B. durch normale Rohr- oder Plattenextrusion hergestellt. Die Extrusionsformmassen können Nanofüllstoffe enthalten.

US 4,652,602 beschreibt Blasformmassen, enthaltend verzweigtes Polycarbonat, denen Glimmerpartikel und Glasfasern als Verstärkungsmittel zugesetzt sein können. Der eingesetzte Glimmer hat eine Partikelgrößenverteilung von 60 mesh bis 200 mesh, d. h. die Verteilung der Partikel beträgt etwa 260 µm bis 74 µm. Der Glimmer wird zur Verbesserung der mechanischen Eigenschaften eingesetzt, während die Blasformfähigkeit von der Strukturviskosität des verzweigten Polycarbonats herrührt.

WO 00/34372 beschreibt amorphe Polyamidformmassen, enthaltend Nanocomposites zur Herstellung von Barrierefolien. Die Materialien sollen eine verbesserte Gasbarriere und gute Transparenz aufweisen, so dass die Materialien zur Herstellung von Lebensmittel- und Getränkeverpackungen geeignet sind.

Es ist daher Aufgabe der vorliegenden Erfindung, hochviskose Polyamid-Extrusions-Blasformmassen auf Basis von nicht amorphen Polyamiden zur Verfügung zu stellen, die leicht herstellbar sind, sich für den Extrusionsblasformprozess eignen und zusätzlich bei Temperaturen von 150 bis 200°C noch eine genügende Festigkeit besitzen.

Diese Aufgabe wird erfindungsgemäß durch hochviskose Polyamid-Extrusions-Blasformmassen auf Basis von Homo- oder Copolyamiden aus der Gruppe, bestehend aus Polyamid 6, Polyamid 46, Polyamid 6 6, Polyamid 11, Polyamid 12, Polyamid 12 12, Polyamid 10 12, Polyamid 6 10, Polyamid 6 12, Polyamid 6 9, Polyamid 12 T, Polyamid 10 T, Polyamid 12 T/12, Polyamid 10 T/12, Polyamid 12 T/10 6, Polyamid 10 T/10 6, Polyamid 6/6 6, Polyamid 6/6 12, Polyamid 6/6 6/6 10, Polyamid 6/6 6/12, Polyamid 6/6 T, Polyamid 6/6 I, Polyamid 6I/6T, Polyamid 6T/66, Polyamid 66/6I/6T oder deren Gemischen, Blends oder Legierungen, mit erhöhter Schmelzefestigkeit gemäß Anspruch 1 gelöst, welche in Kombination (a) Schichtsilikate als nanoskalige Füllstoffe in einer Menge von 0,5-15 Gew.-%, insbesondere in einer Menge von 2-10 Gew.-%, ganz besonders bevorzugt in einer Menge von 4-6 Gew.-%, pro 100 Gewichtsteilen der Polyamidmatrix, die als gleichmäßig dispergiertes, schichtförmiges Material, welches vor dem Einarbeiten in die Polyamidmatrix eine Schichtsicke von 0,7 bis 1,2 nm und einen Zwischenschichtabstand der Mineralschichten von bis zu 5 nm aufweist, in der Polyamidformmmasse vorliegen sowie (b) weiterhin faserförmige Füllmaterialien in Mengen von 5-30 Gew.-%, insbesondere in Mengen von 5-20 Gew.-%, ganz besonders bevorzugt in Mengen von 5-15 Gew.-%, (c) Schlagzähmodifikatoren in Mengen von 3-12 Gew.-%, pro 100 Gewichtsteilen der Polyamidmatrix, und gegebenenfalls weitere Zusatzstoffe (d) enthalten. Die erfindungsgemäßen hochviskosen Extrusions-Blasformmassen weisen eine um mindestens 30 % höhere Schmelzefestigkeit als eine Formmasse aufweisen, welche aus einer Mischung aus 42 Gew.-% Polyamid 6 und 42 Gew.-% Polyamid 66, 6 Gew.-% Schlagzähmodifikator und 10 Gew.-% Glasfaser gebildet ist und bei 280°C gemessen wird. Die Bestimmung der Schmelzefestigkeit wird weiter unten angegeben, wobei die Schmelzefestigkeit dabei in Sekunden angegeben wird. Die gemessenen Sekunden sind die Zeit, welche der Schlauchabschnitt benötigt, um unter dem Einfluss der Schwerkraft sich auf ein Meter zu längen. Die Messwerte (in Sekunden) der verschiedenen Formmassen finden sich in den Tabellen 1 und 2 weiter unten.

In den Unteransprüchen 2-13 sind vorteilhafte Ausführungsformen der Erfindung enthalten. In Anspruch 14 wird ein Verfahren zur Herstellung der Polyamid-Formmassen durch anschließende Eincompoundierung der Komponenten (a), (b), (c) und gegebenenfalls (d) beschrieben.

Die Ansprüche 17 und 18 betreffen die Verwendung der Polyamid-Formmassen zur Herstellung von Formkörpern, Hohlkörpern, Halbzeugen, Platten und Rohren.

Anspruch 19 betrifft Formkörper, erhältlich unter Verwendung der Polyamid-Formmassen. Die erfindungsgemäßen Formkörper können in einer oder mehreren Stufen durch Coextrusion, Extrusions-Blasformen, Pressen oder Ummantelungsverfahren hergestellt werden (vgl. Anspruch 20).

In den erfindungsgemäßen Polyamid-Systemen, in denen die Füllstoff-Partikel (a) Dimensionen im Nanometer-Bereich (unbehandelte Füllstoffe) aufweisen, ergeben sich folgende Effekte: Der thermische Ausdehnungskoeffizient ist verglichen mit dem von ungefüllten Matrixpolyamiden besonders in Verarbeitungsrichtung deutlich reduziert, die feinverteilten Nanopartikel führen zu einer deutlich höheren Schmelzestabilität (mindestens 20 % erhöht) im Vergleich zu nicht modifiziertem Polyamid.

Durch die molekulare Verstärkung ergibt sich auch bei höheren Temperaturen eine erhebliche Verbesserung der mechanischen Eigenschaften.

(Co)Polyamide für die erfindungsgemäße Formmassen sind solche Homo- oder Copolyamide aus der Gruppe aus PA 6, PA 66, PA 11, PA 46, PA 12, PA 1212, PA 1012, PA 610, PA 612, PA 69, PA 10T, PA 12T, deren Gemische oder Copolyamide auf Basis dieser Polyamide, wobei PA 11, PA 12, PA 1212, PA 10T, PA 12T, PA 12T/12, PA 10T/12, PA 12T/106, PA 10T/106 oder deren Gemische bevorzugt sind. Bevorzugt sind erfindungsgemäß auch Copolyamide auf Basis von den vorgenannten Polyamiden wie z. B. PA 12T/12, PA 10T/12, PA 12T/106 und PA 10T/106. Weiterhin können erfindungsgemäß auch PA 6/66, PA 6/612, PA 6/66/610, PA 6/66/12, PA 6T/66, PA 6/6T, PA 6/61, PA 6I/6T oder deren Gemische oder Gemische wie PA 66/6I/6T eingesetzt werden. Ganz besonders bevorzugt sind Mischungen aus PA 6 und Polyamid 66.

Die Polyamide (PA 6, PA 66) für die erfindungsgemäßen Formmassen weisen eine relative Viskosität (gemessen an einer 1,0 gew.-%igen Lösung in Schwefelsäure bei 25C°) von 2,3 bis 4,0, insbesondere von 2,7 bis 3,4 auf.

Den zuvor beschriebenen (Co)Polyamiden oder Gemischen davon können aber auch für bestimmte Zwecke noch andere übliche Polymere wie Polyester, Polyolefine, Polycarbonate, Polyethylen, Vinylalkohole in Mengen bis zu 10 Gew.-% zugesetzt sein. Weiterhin enthalten die verwendeten (Co)Polyamide bzw. die Formmassen übliche Zusatzstoffe (d) wie UV- und Hitzestabilisatoren, Kristallisationsbeschleuniger, -verzögerer, Fließhilfsmittel, Gleitmittel, Entformungsmittel, Flammschutzmittel, Farbmittel sowie Mittel, die die elektrische Leitfähigkeit verbessern können.

Als weitere Zusatzstoffe sind den erfindungsgemäßen Polyamiden bzw. Polyamidformassen, Schlagzähmodifikatoren (c) in Mengen von 3-12 Gew.-%, pro 100 Gewichtsteilen der nicht amorphen Polyamidmatrix, zugesetzt. Diese Polymere, die mit dem Polyamid und den Schichtsilikaten als nanoskaligen. Füllstoffen kombiniert werden können, sind fünktionalisierte Polymere wie Polymere- oder (Co)Polymere auf Polyolefinbasis, die mit Acrylsäure oder Maleinsäureanhydrid gepfropft sein können. Insbesondere seien hier Schlagzähmodifikatoren wie Ethylen-Propylen-Kautschuke (EPM) oder Ethylen-Propylen-Dien-Kautschuke (EPDM) oder Acrylatkautschuke genannt.

Als Schichtsilikate als nanoskalige Füllstoffe (a) zur Herstellung der erfindungsgemäßen Nanokomposites eignen sich solche Schichtsilikate, welche in jeder beliebigen Stufe der Herstellung zugegeben werden können und dabei im Nanometerbereich fein verteilbar sind. Die erfindungsgemäßen Schichtsilikate als nanoskalige Füllstoffe (a) können oberflächenbehandelt sein. Es können aber auch unbehandelte Schichtsilikate (a) oder Mischungen aus unbehandelten und behandelten Schichtsilikaten (a) eingesetzt werden. Die nicht oberflächenbehandelten Schichtsilikate (a), weisen eine Größe von weniger als 10 µm, insbesondere eine Größe im Bereich von 1-5 µm auf. Ultrafeine Schichtsilikate weisen eine Größe von etwa 500 nm auf.

Unter Schichtsilikaten im erfindungsgemässen Sinne werden 1:1 sowie 2:1 Schichtsilikate verstanden. In diesen Systemen sind Schichten aus SiO₄-Tetraedern mit solchen aus M(O,OH)₆-Oktaedern in regelmässiger Weise miteinander verknüpft. M steht dabei für Metallionen wie Al, Mg, Fe. Bei den 1:1-Schichtsilikaten sind dabei jeweils eine Tetraeder- und eine Oktaederschicht miteinander verbunden. Beispiele hierfür sind Kaolin- und Serpentin-Minerale.

Bei den 2:1 Schichtsilikaten sind jeweils zwei Tetraeder- mit einer Oktaederschicht kombiniert. Sind nicht alle Oktaederplätze mit Kationen der benötigten Ladung zur Kompensation der negativen Ladung der SiO₄-Tetraeder sowie der Hydroxid-Ionen besetzt, treten geladene Schichten auf. Diese negative Ladung wird durch den Einbau einwertiger Kationen wie Kalium, Natrium oder Lithium oder zweiwertiger wie Calcium in den Raum zwischen den Schichten ausgeglichen. Beispiele für 2:1-Schichtsilikate sind Talkum, Glimmer, Vermiculite, Illite sowie Smectite, wobei die Smectite zu denen auch der Montmorillonit gehört, sich wegen ihrer Schichtladung leicht mit Wasser quellen lassen. Weiterhin sind die Kationen leicht für Austauschprozesse zugänglich.

Die Schichtdicken der Schichtsilikate betragen vor der Quellung üblicherweise 0,5-2,0 nm, ganz besonders bevorzugt 0,8-1,5 nm (Abstand der Schichtoberkante zur folgenden Schichtoberkante). Hierbei ist es möglich, den Schichtabstand weiter zu vergrössern, indem man das Schichtsilikat beispielsweise mit Polyamidmonomeren, z. B. bei Temperaturen von 25-300°C, vorzugsweise von 80-280°C und insbesondere von 80-160°C über eine Verweilzeit von in der Regel 5-120 Minuten, vorzugsweise von 10-60 Minuten, umsetzt (Quellung). Je nach Art der Verweilzeit und der Art des gewählten Monomeren vergrössert sich der Schichtabstand zusätzlich um 1-15 nm, vorzugsweise um 1-5 nm. Die Länge der Plättchen beträgt üblicherweise bis zu 800 nm, vorzugsweise bis zu 400 nm. Etwa vorhandene oder sich aufbauende Präpolymere tragen in der Regel ebenfalls zur Quellung der Schichtsilikate bei.

Die quellfähigen Schichtsilikate sind durch ihre Ionenautauschkapazität CEC (meq/g) und ihren Schichtabstand d_{L} charakterisiert. Typische Werte für CEC liegen bei 0,7 bis 0,8 meq/g. Der Schichtabstand bei einem trockenen unbehandelten Montmorillonit liegt bei 1 nm und steigt durch Quellung mit Wasser oder Belegung mit organischen Verbindungen auf Werte bis zu 5 nm.

Beispiele für Kationen, die für Austauschreaktionen eingesetzt werden können, sind Ammoniumsalze von primären Aminen mit mindestens 6 Kohlenstoffatomen wie Hexanamin, Decanamin, Dodecanamin, Stearylamine, hydrierte Fettsäureamine oder auch quarternäre Ammoniumverbindungen sowie Ammoniumsalze von α-,ω-Aminosäuren mit mindestens 6 Kohlenstoffatomen. Weitere Stickstoff enthaltende Aktivierungsreagentien sind auf Triazin basierende Verbindungen. Derartige Verbindungen sind beispielsweise in EP-A-1 074 581 beschrieben, auf dieses Dokument wird daher besonders Bezug genommen.

Als Anionen eignen sich Chloride, Sulfate oder auch Phosphate. Neben Ammoniumsalzen können auch Sulfonium- oder Phosphoniumsalze wie beispielsweise Tetraphenyl- oder Tetrabutylphosphoniumhalogenide zur Verwendung kommen.

Da üblicherweise Polymere und Schichtsilikate sehr unterschiedliche Oberflächenspannungen besitzen, können erfindungsgemäß zusätzlich zum Kationenaustausch auch Haftvermittler zur Behandlung der Schichtsilikate verwandt werden. Hierbei eignen sich Titanate oder auch Silane wie γ-Aminoproplytriethoxysilan.

Erfindungsgemäß können somit, wie oben beschrieben ist, Schichtsilikate eingesetzt werden, die mit Onium-Ionen modifiziert worden sind. Es besteht aber auch die Möglichkeit, nicht oberflächenbehandelte Phyllosilikate einzusetzen, welche dann gemäß WO 99/29767(DSM) umgesetzt worden sind. Der Polyamidnanocomposite wird dann derart hergestellt, dass man zunächst das nicht amorphe Polyamid mit dem unbehandelten Tonmineral in einem Mischer mischt, diese Mischung in den Einzug eines Extruders gibt, und nach Herstellung einer Schmelze bis zu 30 Gew.-% Wasser injiziert, das Wasser durch die Entgasungsöffnung entweichen lässt und dann die Schmelze durch eine Düse austreten lässt. Der erhaltene Strang kann dann weiter zu Granulat verarbeitet werden.

Erfindungsgemäß werden als weitere Füllstoffe (b) faserförmige Füllmaterialien in Mengen von 5-30 Gew.-%, insbesondere in Mengen von 5-20 Gew.-%, ganz besonders bevorzugt in Mengen von 5-15 Gew.-%, pro 100 Gewichtsteilen der nicht amorphen Polyamidmatrix, zugesetzt. Beispiele geeigneter faserförmiger Füllstoffe sind Glasfasern, insbesondere E-Glasfasern, Kohlenstofffasern, Kaliumtitanatwhisker, oder Aramidfasern. Bei der Verwendung von Glasfasern können diese zur besseren Verträglichkeit mit dem Matrixmaterial mit einer Schlichte und einem Haftvermittler ausgerüstet sein. Im Allgemeinen haben die verwendeten Kohlenstoff- und Glasfasern einen Durchmesser im Bereich von 6-16 µm. Die Einarbeitung der Glasfasern kann sowohl in Form von Kurzglasfasern als auch in Form von Endlossträngen (Rovings) erfolgen.

Die erfindungsgemäßen Formmassen können darüber hinaus weitere Zusatzstoffe (d) enthalten. Als solche Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleitmittel und Entformungsmittel, Flammschutzmittel, Farbstoffe, Pigmente und Weichmacher zu nennen.

Pigmente und Farbstoffe sind allgemein in Mengen von 0-4 Gew.-%, bevorzugt von 0,5-3,5 Gew.-% und besonders bevorzugt von 0,5-2 Gew.-%, bezogen auf das Gesamtgewicht der Zusammensetzung, enthalten. Die Pigmente zur Einfärbung von Thermoplasten sind allgemein bekannt, siehe z. B. R. Gächter und H. Müller, Taschenbuch der Kunststoffadditive, Carl Hanser Verlag, 1983, S. 494-510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxid wird insbesondere die Rutilform zur Weißfärbung der erfindungsgemäßen thermoplastischen Nanokomposites verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in der Form von Furnace- oder Gasruß eingesetzt wird (siehe hierzu G. Benzing, Pigmente für Anstrichmittel, Expert-Verlag (1998), S.78 ff.).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich.

Weiterhin kann es von Vorteil sein, die genannten Pigmente bzw. Farbstoffe in Mischungen einzusetzen, z. B. Ruß mit Kupferphthalocyaninen, da allgemein die Farbdispergierung im Thermoplasten erleichtert wird. Oxidationsverzögerer und Wärmestabilisatoren, die den thermoplastischen Massen gemäß der Erfindung zugesetzt werden können, sind z. B. Halogenide von Metallen der Gruppe I des Periodensystems, z. B. Natrium, Kalium, Lithium-Halogenide, ggf. in Verbindung mit Kupfer-(I)-Halogeniden, z. B. Chloriden Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z. B. Triphenylphosphin genannt. Ferner sind sterisch gehinderte Phenole, gegebenenfalls in Verbindung mit phosphorhaltigen Säuren bzw. deren Salze, und Mischungen dieser Verbindungen, im allgemeinen in Konzentrationen bis zu 1 Gew.-%, bezogen auf das Gewicht der Mischung einsetzbar.

Beispiele für UV- Stabilisatoren sind verschiedene substituierte Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester, und -amide sowie Ester des Pentaerythrits mit langkettigen Fettsäuren. Es können auch Salze des Calciums, Zinks oder Aluminiums der Stearinsäure, eingesetzt werden.

Die Herstellung der erfindungsgemäßen hochviskosen Formmassen kann auf unterschiedlichen Wegen erfolgen. Diverse Verfahrensführungen können für die Herstellung der erfindungsgemäßen Formmassen angewendet werden. Die Herstellung kann z. B. mittels eines diskontinuierlich oder eines kontinuierlich geführten Verfahrens erfolgen. Theoretisch kann die Herstellung der erfindungsgemäßen Formmassen durch Einbringen der Schichtsilikate, der faserförmigen Füllmaterialien und der Schlagzähmodifikatoren während der Polymerisation oder durch anschließende Eincompoundierung in einem Extrusionsverfahren erfolgen. Derartige Herstellungsvorschriften können z.B. der DE-A-199 48 850 entnommen werden.

Erfindungsgemäß wurde aber gefunden, dass, wenn man die Schichtsilikate, die faserförmigen Füllmaterialien und die Schlagzähmodifikatoren durch anschließende Eincompoundierung in einem Extrusionsverfahren herstellt, besonders hochviskose, für den Extrusions-Blasformprozess in sehr hohem Maße geeignete Formmassen herstellen kann.

Die erfindungsgemäßen Nanokomposite-Formmassen werden daher in einer besonderen Ausführungsform mittels Extrusionsverfahren, d.h. auf einem Extruder, insbesondere einem 30 mm Doppelschneckenextruder ZSK 25 der Firma Werner & Pfleiderer bei Temperaturen zwischen 240 °C und 350 °C hergestellt. Dabei werden die Polymeren zunächst aufgeschmolzen und das Silikatmineral in den Einzug des Extruders sowie gegebenenfalls die Glasfasern in die Schmelze zudosiert und die erhaltenen Nanokomposites konfektioniert.

Es ist aber alternativ auch möglich, dass das Schichtsilikat in Suspension, oder als Feststoff mit zu den polymerisierbaren Monomeren gemischt wird. Dabei werden die Polymeren und das Silikatmineral in den Einschub eines Extruders gegeben sowie gegebenenfalls Glasfasern in die Schmelze dosiert. Diese erhaltenen Nanokomposites werden anschließend gegebenenfalls mit den weiteren Komponenten, wie den mineralischen Füllstoffen und den Schlagzähmodifikatoren und gegebenenfalls als weiteren Zusatzstoff konfektioniert.

Bei dem alternativen, zuvor beschriebenen Verfahren werden die Schichtsilikate in Suspension oder als Feststoff mit dem zum thermoplastischen Kunststoff polymerisierbaren Monomeren gemischt. Danach erfolgt eine Quellung des Schichtsilikats mit den Monomeren. Die anschließende Polymerisation der Monomere kann üblicherweise durchgeführt werden. Die erhaltenen Nanokomposites werden anschließend gegebenenfalls mit den weiteren Komponenten, wie Füllmaterialien, Schlagzähmodifikatoren und den weiteren Zusatzstoffen konfektioniert.

Unter Konfektionierung ist im Sinne der vorliegenden Erfindung die Mischung der Komponenten, aus denen die Nanokomposites aufgebaut sind, z. B. dem Extruder, zum fertigen Nanokomposite zu verstehen.

In einer weiteren bevorzugten Ausführungsform können die erfindungsgemäßen thermoplastischen Nanokomposites dadurch erhalten werden, dass man das nicht amorphe Polyamid und das Schichtsilikat, sowie gegebenenfalls die weiteren mineralischen Füllmaterialien, sowie gegebenenfalls der Schlagzähmodifikator und die anderen Zusatzstoffe nach allgemein bekannten Verfahren z. B. mittels Extrusion bei Temperaturen im Bereich von 160-350°C, besonders bevorzugt bei 240-300°C gemischt werden. Dazu eignet sich besonders ein Zweischneckenextruder mit hoher Scherung, wobei vorzugsweise Scherspannungen gemäß DIN 11443 von 10 bis 10⁵ Pa, insbesondere von 10² bis 10⁴ Pa vorliegen.

Die erhaltenen erfindungsgemäßen thermoplastischen Nanokomposites zeichnen sich insbesondere durch eine erhöhte Schmelzefestigkeit aus. Sie können zur Herstellung von Formkörpern verwendet werden.

Gegenstand der Anmeldung ist weiterhin die Verwendung der erfindungsgemäßen Formmassen zur Herstellung von Formkörpern, Hohlkörpern, Halbzeugen, Platten, Rohren etc. Bevorzugte Verarbeitungsverfahren sind das Profil-Extrusionsverfahren, das Blasformen, wobei unter Blasformen besonders bevorzugt Standard-Extrusionsblasformen, 3D-Extrusionsblasformverfahren und das Saug-Blasformverfahren verstanden werden. Gegenstand der Anmeldung sind weiterhin Formkörper, hergestellt aus den erfindungsgemäßen Formmassen. Erfindungsgemäße Formkörper sind beispielsweise:

Kühlerrohre, Kühlerwasserkästen, Ausgleichsbehälter und andere Medien führende Rohre und Behälter, Luftführungsteile, die insbesondere bei höherer Temperatur eingesetzt werden können, wie Rohre in Turboladern.

Die nachfolgenden Beispiele erläutern die Erfindung zusätzlich ohne sie einzuschränken.

### Beispiele

### Eingesetzte Materialien:

### Polyamide

| Polyamid-Typ | Relative Viskosität 1%-ig in Schwefelsäure 25C° | Relative Viskosität 0,5 %-ig in m-Kresol 25C° | Volumenfliessindex (MVR) bei 275°C/5 kg (cm³/10 min) |
|---|---|---|---|
| PA6 | 3,4 | | 30 |
| PA66 | 2,7 | | 60 |
| PA12 | | 2,25 | 25 |

### Schichtsilikat

Na-Montmorillonit behandelt mit 30 meq/100g Mineral Methyl-, Stearyl-, Bis-2-hydroxyethyl-ammoniumchlorid.
d_{L}: 1.85 nm

### Schlagzähmodifikator

Ethylen-Propylen- Copolymer mit Maleinsäurenanhydrid gepfropft

| | |
|---|---|
| MVR 275°C/5kg: | 13 cm³/10 min |
| Schmelzpunkt DSC: | 55°C |

### Glasfaser

E-Glas, Polyamid-Typ, Durchmesser 10 µm, Länge 4, 5 mm

Die erfindungsgemässen Nanokomposite-Formmassen wurden auf einem 30mm-Doppelschneckenextruder ZSK 25 der Firma Werner&Pfleiderer bei Temperaturen zwischen 240 und 300°C hergestellt. Dabei wurden die Polymere und das Silikat-Mineral in den Einzug des Extruders sowie gegebenenfalls Glasfasern in die Schmelze dosiert.

Die Prüfung der erfindungsgemässen und nicht erfindungsgemäßen Formmassen wurde gemäß folgenden Vorschriften durchgeführt:

| | |
|---|---|
| MVI: | (Melt volume index) bei 275°C/21,6 kg nach ISO 1133 |
| SZ: | Schlagzähigkeit nach ISO 179/1eU |
| MVR: | Volumenflussindex bei 275°C/5kg (cm³/10 min) |

Streckspannung, Reissdehnung und Zug-E-Modul wurden gemäss IS0527 ermittelt. Die Bestimmung der Schmelzefestigkeit erfolgte nach folgendem Verfahren:

In einem Einwellen-Extruder wird die Formmasse aufgeschmolzen und aus einer vertikalen Düse ein Schlauch mit konstantem Durchsatz extrudiert. Die Schmelzefestigkeit in Sekunden ist dabei Zeit, die der Schlauchabschnitt benötigt, um unter dem Einfluss der Schwerkraft sich auf 1 m zu längen.

Wie sich in den nachfolgenden Tabellen zeigt, weisen die erfindungsgemäßen Polyamid-Formmassen eine erhöhte Schmelzefestigkeit auf. Für Polyamid 6 und 66 bzw. Mischungen aus Polyamid 66 und 6 werden erhöhte Schmelzefestigkeiten bei den in Tabelle 1 und Tabelle 2 angegebenen Temperaturen 275C° gemessen und zwar von mindestens 15 Sekunden. Für Polyamid 12 werden erhöhte Schmelzefestigkeiten bei 275C° von mindestens 25 Sekunden gemessen, jeweils im Vergleich zu nicht mit Schichtsilikaten modifizierten üblichen Polyamid-Formmassen, die lediglich mineralische Füllstoffmaterialien enthalten.

In den nachfolgenden Tabellen sind die Vorteile der erfindungsgemäßen Formmassen dargestellt, wobei die mit V beginnenden Versuche die nicht erfindungsgemäßen Vergleichsbeispiele sind.

**Tabelle 1: Unverstärkte Polyamide**

| | | 1 | V1 | 2 | V2 | 3 | V3 |
|---|---|---|---|---|---|---|---|
| | | | | | | | |
| PA6 | | 94 | 100 | 47 | 50 | --- | --- |
| PA66 | | --- | --- | 47 | 50 | --- | --- |
| PA12 | | --- | --- | --- | --- | 94 | 100 |
| Schichtsilikat | | 6 | --- | 6 | --- | 6 | |
| | | | | | | | |
| Schmelzefestigkeit 240°C | s* | --- | --- | --- | --- | 27 | 21 |
| Schmelzefestigkeit 260°C | s* | 20 | 6 | --- | --- | --- | --- |
| Schmelzefestigkeit 280°C | s* | --- | --- | 15 | 7 | --- | --- |

| | | | | | | | |
|---|---|---|---|---|---|---|---|
| * s = Sekunden | | | | | | | |

**Tabelle 2: Verstärkte Polyamide**

| | | 4 | 5 | V4 |
|---|---|---|---|---|
| | | | | |
| PA6 | | 40 | 39 | 42 |
| PA66 | | 40 | 39 | 42 |
| Schlagzähmodifikator | | 4 6 | | 6 |
| Schichtsilikat | | 6 | 6 | --- |
| Glasfaser | | 10 | 10 | 10 |
| | | | | |
| Schmelzefestigkeit 280°C | s | 42 | 50 | 15 |
| MVI 275°C/21,6kg | cm³/10 min | 94 | 50 | 170 |
| Zug-E-Modul 23°C | MPa | 5750 | 5600 | 4900 |
| Zug-E-Modul 100°C | MPa | 1900 | 1800 | 1200 |
| Zug-E-Modul 150°C | MPa | 1450 | 1330 | 1150 |

## Patentansprüche

1. Hochviskose Polyamid-Extrusions-Blasformmassen auf Basis von Homopolyamiden oder Copolyamiden, ausgewählt aus der Gruppe, bestehend aus Polyamid 6, Polyamid 46, Polyamid 6 6, Polyamid 11, Polyamid 12, Polyamid 12 12, Polyamid 10 12, Polyamid 6 10, Polyamid 6 12, Polyamid 6 9, Polyamid 12 T, Polyamid 10 T, Polyamid 12 T/12, Polyamid 10 T/12, Polyamid 12 T/10 6, Polyamid 10 T/10 6, Polyamid 6/6 6, Polyamid 6/6 12, Polyamid 6/6 6/6 10, Polyamid 6/6 6/12, Polyamid 6/6 T, Polyamid 6/6 I, Polyamid 6I/6T, Polyamid 6T/66, Polyamid 66/6I/6T oder deren Gemischen, Blends oder Legierungen, mit erhöhter Schmelzefestigkeit, wobei die Formmassen in Kombination enthalten:
(a) Schichtsilikate als nanoskalige Füllstoffe in einer Menge von 0,5 bis 15 Gew.-% pro 100 Gewichtsteilen der Polyamidmatrix, die als gleichmäßig dispergiertes, schichtförmiges Material, welches vor dem Einarbeiten in die Polyamid-Matrix eine Schichtdicke von 0,7 bis 1,2 nm und einen Zwischenschichtabstand der Mineralschichten von bis zu 5 nm aufweist, in der Polyamidformmasse vorliegen
(b) faserförmige Füllmaterialien in Mengen von 5-30 Gew.-% pro 100 Gewichtsteilen der Polyamidmatrix und
(c) Schlagzähmodifikatoren (c) in Mengen von 3-12 Gew.-% pro 100 Gewichtsteilen der Polyamidmatrix und
gegebenenfalls weitere Zusatzstoffe (d), und
wobei die Formmassen eine um mindestens 30 % höhere Schmelzefestigkeit als eine Formmasse aufweisen, die aus einer Mischung aus 42 Gew.-% Polyamid 6 und 42 Gew.-% Polyamid 66, 6 Gew.-% Schlagzähmodifikator und 10 Gew.-% Glasfaser gebildet ist und bei 280°C gemessen wird,
wobei die Schmelzefestigkeit die Zeit in Sekunden ist, die ein Schlauchabschnitt benötigt, um sich unter dem Einfluss der Schwerkraft auf 1 m zu längen, wenn die in einem Einwellen-Extruder aufgeschmolzene Formmasse aus einer vertikalen Düse als Schlauch mit konstantem Durchsatz extrudiert wird.

2. Formmassen gemäß Anspruch 1, **dadurch gekennzeichnet, dass** die nanoskaligen Füllstoffe (a) in einer Menge von 2-10 Gew.-% pro 100 Gewichtsteilen der Polyamidmatrix in den Formmassen enthalten sind.

3. Formmassen gemäß Anspruch 1 oder 2, **dadurch gekennzeichnet, dass** die nanoskaligen Füllstoffe (a) in einer Menge von 4-6 Gew.-% pro 100 Gewichtsteilen der Polyamidmatrix in den Formmassen enthalten sind.

4. Formmassen gemäß einem der Ansprüche 1 bis 3, **dadurch gekennzeichnet, dass** die faserförmige Füllmaterialien (b) in Mengen von 5-20 Gew.-% pro 100 Gewichtsteilen der Polyamidmatrix in den Formmassen enthalten sind.

5. Formmassen gemäß einem der Ansprüche 1 bis 4, **dadurch gekennzeichnet, dass** sie faserförmigen Füllmaterialien (b) in Mengen von 5-15 Gew.-% pro 100 Gewichtsteilen in den Formmassen enthalten sind.

6. Formmassen gemäß einem der vorhergehenden Ansprüche 1 bis 5, **dadurch gekennzeichnet, dass** das in der Polyamidmatrix gleichmäßig dispergierte Schichtsilikat eine Kationentausch-Kapazität von 0,5 bis 2 meq/g Mineral, insbesondere von 0,7 bis 0,8 meq/g Mineral, aufweist.

7. Formmassen gemäß einem der vorhergehenden Ansprüche 1 bis 6, **dadurch gekennzeichnet, dass** das Schichtsilikat mit einem Aktivierungs- bzw. Modifizierungsmittel aus der Gruppe der Triazine, der Ammoniumsalze von primären Aminen mit mindestens 6 Kohlenstoffatomen wie Hexanamin, Decanamin, Dodecanamin, Stearylamin, hydrierten Fettsäureaminen oder quarternären Ammoniumverbindungen, Ammoniumsalzen von α-,ω-Aminosäuren mit mindestens 6 Kohlenstoffatomen, sowie Sulfonium- oder Phosphoniumsalzen behandelt worden ist.

8. Formmassen gemäß irgendeinem der Ansprüche 1 bis 7, **dadurch gekennzeichnet, dass** die Schichtsilikate aus der Gruppe aus Montmorillonit, Saponit, Beidellit, Nontronit, Hektorit, Stevensit, Vermiculit, Illite, Pyrosit ausgewählt sind.

9. Formmassen gemäß einem der vorhergehenden Ansprüche 1 bis 8, **dadurch gekennzeichnet, dass** das Schichtsilikat mit Haftvermittlern behandelt worden ist und der Haftvermittler bis zu 2 Gew.-% in der Formmasse, pro 100 Gewichtteilen der Polyamidmatrix, enthalten ist.

10. Formmassen gemäß einem der Ansprüche 1 bis 9, **dadurch gekennzeichnet, dass** den Formmassen weitere Polymere in Mengen von bis zu 30 Gew.-% aus der Gruppe der Polyester, Polyolefine, Polycarbonate, Polyethylenvinylalkohole zugesetzt sind.

11. Formmassen gemäß einem der Ansprüche 1 bis 10, **dadurch gekennzeichnet, dass** den Formmassen weitere Zusatzstoffe (d) aus der Gruppe der UV- und Hitze-Stabilisatoren, der Antioxidantien, der Pigmente, Farbstoffe, Nucleierungsmittel, Kristallisations-Beschleuniger, Kristallisations-Verzögerer, Fließhilfsmittel, Gleitmittel, Entformungsmittel, Flammschutzmittel, sowie Mittel, die die elektrische Leitfähigkeit verbessern, zugesetzt sind.

12. Formmassen gemäß einem der Ansprüche 1 bis 11, **dadurch gekennzeichnet, dass** die faserförmigen Füllmaterialien Glasfasern, insbesondere E-Glasfasern, sind.

13. Formmassen gemäß einem der vorhergehenden Ansprüche 1 bis 12, **dadurch gekennzeichnet, dass** den Formmassen Schlagzähmodifikatoren (c) auf Basis von Polyolefinen, die mit Acrylsäure und Maleinsäureanhydrid gepfropft sind, insbesondere Ethylen-Propylen-Kautschuke (EPM), Ethylen-Propylen-Dien-Kautschuke (EPDM) oder Acrylatkautschuke zugesetzt sind.

14. Verfahren zur Herstellung der Formmassen gemäß einem der Ansprüche 1 bis 13, **dadurch gekennzeichnet, dass** die Herstellung von Formmassen durch Aufschmelzen der Polymere und anschließende Eincompoundierung der Schichtsilikate (a), der faserförmigen Füllmaterialien (b) und der Schlagzähmodifikatoren (c) in einem Extrusionsverfahren erfolgt.

15. Verfahren gemäß Anspruch 14, **dadurch gekennzeichnet, dass** die Formmassen in einem Doppelschneckenextruder bei Temperaturen von zwischen 240 °C und 350 °C hergestellt werden.

16. Verfahren zur Herstellung der Formmassen gemäß einem der Ansprüche 1 bis 13, welches durch Melt intercalation erfolgt, wobei die Polyamide, die Schichtsilikate, die faserförmigen Füllmaterialien (b), die Schlagzähmodifikatoren (c) sowie gegebenenfalls die weiteren Zusatzstoffe (d), bei Temperaturen im Bereich von 160-350°C gemischt und in die Schmelze bis zu 30 Gew.-% einer Flüssigkeit, insbesondere Wasser, injiziert werden.

17. Verwendung der Formmassen gemäß einem der Ansprüche 1 bis 13 zur Herstellung von Formkörpern, Hohlkörpern, Halbzeugen, Platten, Rohren.

18. Verwendung gemäß Anspruch 17, **dadurch gekennzeichnet, dass** die Hohlkörper Flaschen sind.

19. Formkörper, erhältlich unter Verwendung der Formmassen gemäß einem der Ansprüche 1 bis 13.

20. Verfahren zur Herstellung von Formkörpern nach Anspruch 19 in einer oder mehreren Stufen durch Coextrusion, Extrusions-Blasformen, Pressen oder Ummantelungs-Verfahren.

## Claims

1. Highly viscous, polyamide extrusion blow-moulding compositions based on homopolyamides or copolyamides, selected from the group comprising polyamide 6, polyamide 46, polyamide 6 6, polyamide 11, polyamide 12, polyamide 12 12, polyamide 10 12, polyamide 6 10, polyamide 6 12, polyamide 6 9, polyamide 12 T, polyamide 10 T, polyamide 12 T/12, polyamide 10 T/12, polyamide 12 T/10 6, polyamide 10 T/10 6, polyamide 6/6 6, polyamide 6/6 12, polyamide 6/6 6/6 10, polyamide 6/6 6/12, polyamide 6/6 T, polyamide 6/6 I, polyamide 6I/6T, polyamide 6T/66, polyamide 66/6I/6T or mixtures, blends or alloys thereof, having an increased melt-flow resistance, wherein the moulding compositions contain in combination:
(a) layered silicates as nanoscale filler substances in a quantity of between 0.5 and 15 % by wt. per 100 parts by weight of the polyamide matrix, which silicates are present in the polyamide moulding composition as a uniformly dispersed, stratified material, which has a layer thickness of between 0.7 and 1.2 nm and an intermediate spacing between the mineral layers of up to 5 nm prior to incorporation in the polyamide matrix,
(b) fibrous filler materials in quantities of 5 - 30 % by wt. per 100 parts by weight of the polyamide matrix, and
(c) impact-toughness modifiers (c) in quantities of 3 - 12 % by wt. per 100 parts by weight of the polyamide matrix, and
possibly further additional substances (d), and
wherein the moulding compositions have a melt-flow resistance which is at least 30 % higher than a moulding composition which is formed from a mixture of 42 % by wt. polyamide 6 and 42 % by wt. polyamide 66, 6 % by wt. impact-toughness modifier and 10 % by wt. glass fibre and is measured at 280° C,
the melt-flow resistance being the time in seconds which a hose portion requires in order to be lengthened to 1 m by the influence of the force of gravity when the moulding composition, fused in a single-shaft extruder, is extruded from a vertical nozzle, as a tube, at a constant throughput.

2. Moulding compositions according to claim 1, **characterised in that** the nanoscale filler substances (a) are contained in the moulding compositions in a quantity of 2 - 10 % by wt. per 100 parts by weight of the polyamide matrix.

3. Moulding compositions according to claim 1 or 2, **characterised in that** the nanoscale filler substances (a) are contained in the moulding compositions in a quantity of 4 - 6 % by wt. per 100 parts by weight of the polyamide matrix.

4. Moulding compositions according to one of claims 1 to 3, **characterised in that** the fibrous filler materials (b) are contained in quantities in the moulding compositions of 5 - 20 % by wt. per 100 parts by weight of the polyamide matrix.

5. Moulding compositions according to one of claims 1 to 4, **characterised in that** the fibrous filler materials (b) are contained in the moulding compositions in quantities of 5 - 15 % by wt. per 100 parts by weight.

6. Moulding compositions according to one of the preceding claims 1 to 5, **characterised in that** the layered silicate, dispersed uniformly in the polyamide matrix, has a cation-exchanging capacity of between 0.5 and 2 me²/g mineral, more especially between 0.7 and 0.8 me²/g mineral.

7. Moulding compositions according to one of the preceding claims 1 to 6, **characterised in that** the layered silicate has been treated with an activating agent or respectively a modifying agent from the group of triazines, ammonium salts of primary amines having at least 6 carbon atoms such as hexanamine, decanamine, dodecanamine, stearyl amine, hydrated fatty acid amines or quaternary ammonium compounds, ammonium salts of α-,ω- amino acids having at least 6 carbon atoms, as well as sulphonium or phosphonium salts.

8. Moulding compositions according to any of claims 1 to 7, **characterised in that** the layered silicates are selected from the group of montmorillonite, saponite, beidellite, nontronite, hectorite, stevensite, vermiculite, illites and pyrosite.

9. Moulding compositions according to one of the preceding claims 1 to 8, **characterised in that** the layered silicate has been treated with bonding agents, and the bonding agent is contained up to 2 % by wt. in the moulding composition per 100 parts by weight of the polyamide matrix.

10. Moulding compositions according to one of claims 1 to 9, **characterised in that** additional polymers in quantities of up to 30 % by wt. from the group of polyesters, polyolefins, polycarbonates and polyethylene vinyl alcohols are added to the moulding compositions.

11. Moulding compositions according to one of claims 1 to 10, **characterised in that** further additional substances (d) from the group of UV and heat stabilisers, antioxidants, pigments, dyestuffs, nucleating agents, crystallisation accelerators, crystallisation retardants, flow adjuvants, lubricants, mould-releasing agents, flameproofing agents, as well as agents which improve electrical conductivity, are added to the moulding compositions.

12. Moulding compositions according to one of claims 1 to 11, **characterised in that** the fibrous filler materials are glass fibres, more especially E-glass fibres.

13. Moulding compositions according to one of the preceding claims 1 to 12, **characterised in that** impact-toughness modifiers (c), based on polyolefins which are grafted with acrylic acid and maleic acid anhydride, more especially ethylene propylene rubbers (EPM), ethylene propylene diene rubbers (EPDM) or acrylate rubbers, are added to the moulding compositions.

14. Method of producing the moulding compositions according to one of claims 1 to 13, **characterised in that** moulding compositions are produced by fusing the polymers and by subsequently compounding the layered silicates (a), the fibrous filler materials (b) and the impact-toughness modifiers (c) in an extrusion method.

15. Method according to claim 14, **characterised in that** the moulding compositions are produced in a twin-screw extruder at temperatures of between 240° C and 350° C.

16. Method of producing the moulding compositions according to one of claims 1 to 13, which is effected by melt intercalation, wherein the polyamides, the layered silicates, the fibrous filler materials (b), the impact-toughness modifiers (c) as well as possibly further additional substances (d), are mixed at temperatures within the range of 160 - 350° C, and up to 30 % by wt. of a liquid, more especially water, are injected into the molten mass.

17. Use of the moulding compositions according to one of claims 1 to 13 to produce moulded bodies, hollow bodies, semi-finished articles, plates and pipes.

18. Use according to claim 17, **characterised in that** the hollow bodies are bottles.

19. Moulded bodies, obtainable by using the moulding compositions according to one of claims 1 to 13.

20. Method of producing moulded bodies according to claim 19 in one or more stages by co-extrusion, extrusion blow-moulding, pressing or covering methods.

## Revendications

1. Masses moulables en polyamide à haute viscosité pour extrusion-soufflage, à base d'homopolyamides ou de copolyamides choisis dans le groupe comprenant le polyamide 6, le polyamide 46, le polyamide 6 6, le polyamide 11, le polyamide 12, le polyamide 12 12, le polyamide 10 12, le polyamide 6 10, le polyamide 6 12, le polyamide 6 9, le polyamide 12 T, le polyamide 10 T, le polyamide 12 T/12, le polyamide 10 T/12, le polyamide 12 T/10 6, le polyamide 10 T/10 6, le polyamide 6/6 6, le polyamide 6/6 12, le polyamide 6/6 6/6 10, le polyamide 6/6 6/12, le polyamide 6/6 T, le polyamide 6/6 I, le polyamide 6I/6T, le polyamide 6T/66, le polyamide 66/6I/6T ou leurs mélanges ou alliages, ayant une résistance en fusion élevée, lesdites masses moulables contenant en combinaison :
(a) des phyllosilicates en tant que nanocharges en une quantité allant de 0,5 à 15% en poids pour 100 parties en poids de la matrice en polyamide, qui sont présents dans la masse moulable en polyamide sous la forme d'un matériau lamellaire uniformément dispersé qui, avant son incorporation dans la matrice en polyamide, présente une épaisseur de couche de 0,7 à 1,2 nm et une distance entre les couches minérales allant jusqu'à 5 nm,
(b) des matières de charge fibreuses en des quantités allant de 5 à 30% en poids pour 100 parties en poids de la matrice en polyamide, et
(c) des modificateurs de résilience en des quantités allant de 3 à 12% en poids pour 100 parties en poids de la matrice en polyamide, et
(d) le cas échéant d'autres additifs, et
les masses moulables présentant une résistance en fusion supérieure d'au moins 30% à celle d'une masse moulable formée à partir d'un mélange de 42% en poids de polyamide 6 et 42% en poids de polyamide 66, 6% en poids de modificateur de résilience et 10% en poids de fibre de verre et mesurée à 280°C,
la résistance en fusion étant le temps en secondes nécessaire à un segment de gaine pour s'allonger à 1 m sous l'effet de la pesanteur lorsque la masse moulable fondue dans une extrudeuse monovis est extrudée en gaine à vitesse constante à partir d'une filière verticale.

2. Masses moulables selon la revendication 1, **caractérisées en ce que** les nanocharges (a) sont contenues dans les masses moulables en une quantité allant de 2 à 10% en poids pour 100 parties en poids de la matrice en polyamide.

3. Masses moulables selon la revendication 1 ou la revendication 2, **caractérisées en ce que** les nanocharges (a) sont contenues dans les masses moulables en une quantité allant de 4 à 6% en poids pour 100 parties en poids de la matrice en polyamide.

4. Masses moulables selon l'une des revendications 1 à 3, **caractérisées en ce que** les matières de charge fibreuses (b) sont contenues dans les masses moulables en des quantités allant de 5 à 20% en poids pour 100 parties en poids de la matrice en polyamide.

5. Masses moulables selon l'une des revendications 1 à 4, **caractérisées en ce que** les matières de charge fibreuses (b) sont contenues dans les masses moulables en des quantités allant de 5 à 15% en poids pour 100 parties en poids.

6. Masses moulables selon l'une des revendications 1 à 5 précédentes, **caractérisées en ce que** le phyllosilicate uniformément dispersé dans la matrice en polyamide présente une capacité d'échange de cations de 0,5 à 2 méq par g de minéral, en particulier de 0,7 à 0,8 méq par g de minéral.

7. Masses moulables selon l'une des revendications 1 à 6 précédentes, **caractérisées en ce que** le phyllosilicate a été traité avec un agent activateur ou modificateur du groupe des triazines, des sels d'ammonium d'amines primaires ayant au moins 6 atomes de carbone telles que l'hexanamine, la décanamine, la dodécanamine, la stéarylamine, des amines grasses hydrogénées ou des composés d'ammonium quaternaire, des sels d'ammonium d'α,ω-aminoacides ayant au moins 6 atomes de carbone, ainsi que des sels de sulfonium ou de phosphonium.

8. Masses moulables selon l'une quelconque des revendications 1 à 7, **caractérisées en ce que** les phyllosilicates sont choisis dans le groupe comprenant la montmorillonite, la saponite, la beidellite, la nontronite, l'hectorite, la stevensite, la vermiculite, l'illite, la pyrosite.

9. Masses moulables selon l'une des revendications 1 à 8 précédentes, **caractérisées en ce que** le phyllosilicate a été traité avec des promoteurs d'adhésion et **en ce que** le promoteur d'adhésion est contenu dans la masse moulable en une quantité allant jusqu'à 2% en poids pour 100 parties en poids de la matrice en polyamide.

10. Masses moulables selon l'une des revendications 1 à 9, **caractérisées en ce que** d'autres polymères, choisis dans le groupe comprenant des polyesters, des polyoléfines, des polycarbonates, des alcools polyéthylène vinyliques, sont ajoutés aux masses moulables en des quantités allant jusqu'à 30% en poids.

11. Masses moulables selon l'une des revendications 1 à 10, **caractérisées en ce que** d'autres additifs (d), choisis dans le groupe comprenant des agents de stabilisation aux UV et à la chaleur, des antioxydants, des pigments, des colorants, des agents de nucléation, des accélérateurs de cristallisation, des retardateurs de cristallisation, des auxiliaires de rhéologie, des agents antifriction, des agents de démoulage, des agents ignifugeants ainsi que des agents améliorant la conductibilité électrique, sont ajoutés aux masses moulables.

12. Masses moulables selon l'une des revendications 1 à 11, **caractérisées en ce que** les matières de charge fibreuses sont des fibres de verre, en particulier des fibres de verre E.

13. Masses moulables selon l'une des revendications 1 à 12 précédentes, **caractérisées en ce que** des modificateurs de résilience (c) à base de polyoléfines greffées avec de l'acide acrylique et de l'anhydride maléique, notamment des caoutchoucs éthylène-propylène (EPM), des caoutchoucs éthylène-propylène-diène (EPDM) ou des caoutchoucs à base d'acrylates, sont ajoutés aux masses moulables.

14. Procédé de production des masses moulables selon l'une des revendications 1 à 13, **caractérisé en ce que** les masses moulables sont produites en faisant fondre les polymères et en y incorporant ensuite par compoundage les phyllosilicates (a), les matières de charge fibreuses (b) et les modificateurs de résilience (c) dans un procédé d'extrusion.

15. Procédé selon la revendication 14, **caractérisées en ce que** les masses moulables sont produites dans une extrudeuse bivis à des températures allant de 240°C à 350°C.

16. Procédé de production des masses moulables selon l'une des revendications 1 à 13, qui s'effectue par une intercalation en fusion, dans lequel les polyamides, les phyllosilicates, les matières de charge fibreuses (b), les modificateurs de résilience (c) ainsi le cas échéant que les autres additifs (d) sont mélangés à des températures dans la plage de 160 à 350°C et une quantité allant jusqu'à 30% en poids d'un liquide, en particulier de l'eau, est injectée dans la fusion.

17. Utilisation des masses moulables selon l'une des revendications 1 à 13 pour fabriquer des articles moulés, des corps creux, des semi-finis, des plaques, des tubes.

18. Utilisation selon la revendication 17, **caractérisée en ce que** les corps creux sont des bouteilles.

19. Articles moulés pouvant être obtenus en utilisant les masses moulables selon l'une des revendications 1 à 13.

20. Procédé de production d'articles moulés selon la revendication 19 en une ou plusieurs étapes par des procédés de coextrusion, extrusion-soufflage, compression ou gainage.
